# EUROPEAN PATENT APPLICATION

(11) **EP 4 160 712 A1**
(43) Date of publication of application: **05.04.2023**
(21) Application number: 21813947.5
(22) Date of filing: 25.02.2021
(51) Int. Cl.: H01M 4/02, H01M 4/13, H01G 11/06, H01G 11/26, H01G 11/52, H01M 10/04, H01M 10/058, H01M 50/46

(54) **POWER STORAGE DEVICE AND ELECTRODE OR SEPARATOR USED FOR SAME**

(30) Priority: 27.05.2020 JP 2020092415
(71) Applicant: Panasonic Intellectual Property Management Co., Ltd., Osaka-shi, Osaka 540-6207 (JP)
(72) Inventor: AKUTSU, Makoto, Chuo-ku, Osaka-shi, Osaka 540-6207 (JP); SATO, Takao, Chuo-ku, Osaka-shi, Osaka 540-6207 (JP); OGAWA, Yuko, Chuo-ku, Osaka-shi, Osaka 540-6207 (JP)
(74) Representative: Novagraaf International SA
(86) International application number: PCT/JP2021/007137
(87) International publication number: WO 2021/240926

(57) **Abstract**

A power storage device includes a first electrode, a second electrode, a separator interposed between the first electrode and the second electrode, and a barrier layer interposed between at least one of the following: between the first electrode and the separator and between the second electrode and the separator, wherein the barrier layer includes a complexing agent and a resin material.

## Description

### [Technical Field]

The present disclosure relates mainly to a power storage device.

### [Background Art]

Power storage devices have been used in various fields, such as electronic devices, industrial devices, and devices for automobiles. Recently, various attempts have been made for improvement in constituents of power storage devices to ensure their excellent characteristics.

For example, power storage devices such as non-aqueous electrolyte batteries and lithium ion capacitors use electrochemical redox reactions. When metals such as copper and iron are present as impurities in these power storage devices, dissolution and deposition reactions of these metals occur and the battery voltage decreases. As a result, charge/discharge cycle characteristics of power storage devices are deteriorated. It is important to suppress metal dissolution and deposition in power storage devices in which redox reactions are used.

For a method for suppressing the metal dissolution and deposition, for example, in the field of metal surface treatment, a technique using a complexing agent has been known. The complexing agent forms a complex by bonding with a metal ion. By applying a coating including a complexing agent on the metal surface, metal dissolution and deposition can be suppressed. For example, the composition to be applied to a metal substrate proposed by Patent Literature 1 is a composition including a metal cation, a complexing agent, and an aqueous carrier. The processing method of a metal substrate includes a step of applying the composition to a substrate, and a step of forming a chemical coating by drying the composition.

### [Citation List]

### [Patent Literature]

PLT1: Japanese Translation of PCT International Application Publication No. 2016-514770

### [Summary of Invention]

Even if the complexing agent used in the metal surface treatment field is used for power storage devices, it is difficult to sufficiently suppress metal dissolution and deposition. For example, when the complexing agent is dissolved in a liquid electrolyte, or dispersed in an electrode mixture, bonding of the metal ion with the complexing agent does not efficiently proceed.

When the complexing agent is included in the liquid electrolyte, electrode mixture, and the like, an SEI (solid electrolyte interface) coating including the complexing agent can be formed on the electrode surface, but it is difficult to keep a sufficient amount of the complexing agent in such a coating.

An aspect of the present disclosure relates to a power storage device including a first electrode, a second electrode, a separator interposed between the first electrode and the second electrode, and a barrier layer interposed between at least one of the following: between the first electrode and the separator, and between the second electrode and the separator, wherein the barrier layer includes a complexing agent and a resin material.

Another aspect of the present disclosure relates to an electrode for a power storage device including an electrode having a first surface and a second surface opposing the first surface, and a barrier layer supported on at least one of the first surface and the second surface of the electrode, wherein the electrode includes an electrode active material layer and a current collector supporting the electrode active material layer, the barrier layer is provided at least on a surface of the electrode active material layer at an opposite side of the current collector side, and the barrier layer includes a complexing agent and a resin material.

Still another aspect of the present disclosure relates to a separator for a power storage device, the separator having a first surface and a second surface opposing the first surface, and a barrier layer supported on at least one of the first surface and the second surface of the separator, wherein the barrier layer includes a complexing agent and a resin material.

The present disclosure can improve charge/discharge cycle characteristics in power storage devices.

### [Brief Description of Drawings]

[FIG. 1] FIG. 1 is a partially cutaway schematic oblique view of a non-aqueous electrolyte secondary battery in an embodiment of the present disclosure.
[FIG. 2] FIG. 2 is a schematic view of an example of the electrode group of the present disclosure.
[FIG. 3] FIG. 3 is a schematic view of another example of the electrode group of the present disclosure.
[FIG. 4] FIG. 4 is a schematic view of still another example of the electrode group of the present disclosure.

### [Description of Embodiments]

A power storage device of the present disclosure includes a first electrode, a second electrode, a separator interposed between the first electrode and the second electrode, and a barrier layer interposed between at least one of the following: between the first electrode and the separator, and between the second electrode and the separator.

The power storage device is not particularly limited, and examples thereof include non-aqueous electrolyte batteries such as a lithium primary battery, a lithium ion secondary battery, and a lithium (metal) secondary battery; electrochemical capacitors such as a lithium ion capacitor using activated carbon or electrically conductive polymer for the positive electrode and using a carbon material for the negative electrode; and electric double-layer capacitors. In the case of the power storage device such as the non-aqueous electrolyte battery and electrochemical capacitor, one of the first electrode and the second electrode is a positive electrode, and the other is a negative electrode.

The barrier layer includes a complexing agent and a resin material. The complexing agent can form a complex with a metal ion. The resin material has a role of a binder, retaining the complexing agent between at least one electrode and the separator. The barrier layer formed as a layer between at least one electrode and the separator will suffice, and it may be in a form of a coating, sheet, or film. With the above-described configuration, the barrier layer is a barrier suppressing movement of the metal ion between at least one electrode and the separator.

The effects by the barrier layer of suppressing the movement of the metal ion are significant when, for example, impurity metals such as copper and iron are present in the power storage device. When the impurity metal is exposed to the positive electrode potential, the metal ion may be dissolved into the liquid electrolyte from the impurity metal. The metal ion may be dissolved from the active material in the electrode. For example, the positive electrode of a non-aqueous electrolyte battery includes a positive electrode active material, and the positive electrode active material has a high potential, and includes a metal component (in many cases, transition metal). The metal ion dissolved into the liquid electrolyte moves from the positive electrode side to the negative electrode side, and deposits as an impurity metal. On the other hand, when the barrier layer is provided in the power storage device, the moving of the dissolved metal ion between the electrodes is significantly suppressed, and reduction in the battery voltage is suppressed. In the following, the metal ion that can be deposited in the negative electrode as an impurity metal is also referred to as an impurity metal ion.

The movement of the complexing agent in the barrier layer is limited by the resin material. Meanwhile, the impurity metal ion dissolved in the liquid electrolyte at the positive electrode side passes through the barrier layer upon moving to the negative electrode side. Therefore, the barrier layer increases the possibility of interaction between the impurity metal ion and the complexing agent, and the complex is formed efficiently. The metal ion formed into the complex has limited freedom in movement as in the case of the complexing agent. Thus, movement of the impurity metal ion from the positive electrode side to the negative electrode side can be significantly suppressed.

The complexing agent is present more between at least one electrode and the separator, but some are dispersed in the power storage device. The complexing agent reached to the impurity metal surface by dispersion forms a coating at the metal surface, and suppresses dissolution of the metal ion. The complexing agent dispersed in the positive electrode forms a coating on the positive electrode active material surface, and suppresses dissolution of the metal ion from the positive electrode active material. That is, with the above-described configuration, not only the movement of metal ions from the positive electrode side to the negative electrode side, the dissolution of the metal ions itself is suppressed.

Next, the electrode for a power storage device of the present disclosure is an electrode (hereinafter, referred to as electrode X) having a first surface and a second surface at an opposing side, and an electrode having a barrier layer supported on at least one of the first surface and the second surface of the electrode. The electrode portion excluding the barrier layer corresponds to the first electrode or second electrode of the above-described power storage device, and for example, corresponds to the positive electrode or negative electrode of the non-aqueous electrolyte battery. That is, the electrode for a power storage device can be a positive electrode having a barrier layer, and can be a negative electrode having a barrier layer.

The electrode includes, for example, an electrode mixture layer (or electrode active material layer), and a current collector supporting the same. In this case, the entirety or most of the first surface and the second surface having a barrier layer both correspond to the surface (hereinafter, also referred to as outer surface) at an opposite side of the current collector side of the electrode mixture layer (or electrode active material layer). However, the surface of the current collector that is not covered with the electrode mixture layer can also be at least a portion of the first surface or the second surface having a barrier layer.

In the case of a lithium secondary battery in which lithium metal deposits during charging and lithium metal dissolves during discharging, the negative electrode may not have a negative electrode mixture layer (or negative electrode active material layer). In this case, the entirety or most of the first surface and the second surface having a barrier layer can be the surface of the negative electrode current collector.

Next, the separator for a power storage device of the present disclosure is a separator (hereinafter, referred to as separator X) having a first surface and a second surface opposing the first surface, and a separator having a barrier layer supported on at least one of the first surface and the second surface of the separator. The separator portion excluding the barrier layer corresponds to the separator of the above-described power storage device.

The above-described power storage device having at least one barrier layer can be composed by using at least one of the electrode X having an electrode corresponding to the first electrode, the electrode X having an electrode corresponding to the second electrode, and the separator X. The barrier layer may be a single layer structure, or a multiple layer structure. For example, a power storage device composed of the electrode X having a barrier layer on both sides, and the separator X having a barrier layer on both sides has a 2-layer structure barrier layer between the electrode and the separator.

To capture the impurity metal ion efficiently, the barrier layer preferably has a certain level of thickness. Meanwhile, in view of suppressing the increase in the resistant component and maintaining excellent performance in the power storage device, the barrier layer preferably has a thickness that is not excessively thick. The thickness of the barrier layer may be, for example, 1 µm or more and 40 µm or less, or 2 µm or more and 10 µm or less. The thickness of the barrier layer can be determined, for example, by photographing cross sections of the barrier layer along the thickness direction with a scanning electron microscope (SEM), measuring a thickness T in the region where the resin material is present between the electrode and the separator at five points, and averaging them.

The form of the complexing agent is not particularly limited, but in terms of enabling dispersion in the resin material at a high concentration, it is preferably in a particulate form. That is, preferably, the complexing agent does not dissolve completely in the liquid electrolyte that enters into the barrier layer and at least a portion thereof is present in a solid state.

In view of keeping a sufficient amount of complexing agent in the barrier layer, the ratio of the cross sectional area of the complexing agent relative to the total cross sectional area of the complexing agent and the resin material may be 15% or more and less than 100%, or 15% or more and 90% or less, or 50% or more and 90% or less. The ratio of the cross sectional area of the complexing agent relative to the total cross sectional area of the complexing agent and the resin material can be determined by, for example, photographing the cross section along the thickness direction of the barrier layer by scanning electron microscope-energy dispersive X-ray spectroscopy (EDX)(SEM-EDX), determining the area of the resin material and the area of the complexing agent in the photographed range, and the ratio of the complexing agent area to the total area of the resin material and the complexing agent.

The barrier layer may contain the complexing agent in an amount of, relative to 100 parts by mass of resin material, 5 parts by mass to 1000 parts by mass, 15 parts by mass to 500 parts by mass, or 60 parts by mass to 500 parts by mass.

For the complexing agent, without particular limitation, a 1,3,5-triazine derivative having at least one thiol group (SH group) is used. Examples of the 1,3,5-triazine derivative having at least one thiol group (SH group) include 1,3,5-triazine-2-thiol, 1,3,5-triazine-2,4-dithiol, 1,3,5-triazine-2,4,6-trithiol, and 6-substituted-1,3,5-triazine-2,4-dithiol. Preferably, the substituent for 6-substituted-1,3,5-triazine-2,4-dithiol is a hydroxy group, alkyl group, alkylthio group, alkoxy group, amino group, alkylamino group, allylamino group, or the like. Specific examples include 6-methylthio-1,3,5-triazine-2,4-dithiol, 6-butylthio-1,3,5-triazine-2,4-dithiol, 6-methylamino-1,3,5-triazine-2,4-dithiol, 6-dimethylamino-1,3,5-triazine-2,4-dithiol, 6-butylamino-1,3,5-triazine-2,4-dithiol, 6-diisopropylamino-1,3,5-triazine-2,4-dithiol, 6-dibutylamino-1,3,5-triazine-2,4-dithiol, 6-diisobutylamino-1,3,5-triazine-2,4-dithiol, 6-dioctylamino-1,3,5-triazine-2,4-dithiol, 6-diallylamino-1,3,5-triazine-2,4-dithiol, and 6-allylamino-1,3,5-triazine-2,4-dithiol. In particular, 6-methylthio-1,3,5-triazine-2,4-dithiol, 6-butylthio-1,3,5-triazine-2,4-dithiol, 6-methylamino-1,3,5-triazine-2,4-dithiol, 6-dimethylamino-1,3,5-triazine-2,4-dithiol, 6-diisopropylamino-1,3,5-triazine-2,4-dithiol, 6-butylamino-1,3,5-triazine-2,4-dithiol, 6-dibutylamino-1,3,5-triazine-2,4-dithiol, 1,3,5-triazine-2-thiol, 1,3,5-triazine-2,4-dithiol, 1,3,5-triazine-2,4,6-trithiol, or the like is used. A kind of complexing agent may be used singly, or two or more kinds thereof may be used in combination.

For the resin material, without particular limitation, polyacrylonitrile, acrylic resin (e.g., polyacrylic acid, polymethacrylic acid, acrylic acid-methacrylic acid copolymer, polymethyl acrylate, polymethyl methacrylate, polyethyl acrylate, polyethyl methacrylate, ethylene-acrylic acid copolymer, or a salt thereof), fluorine resin (e.g., polyvinylidene fluoride, polyhexafluoropropylene, polytetrafluoroethylene), polyamide resin (e.g., aramid resin) and polyimide resin (e.g., polyimide, polyamide-imide), polyolefin resin (e.g., polyethylene, polypropylene), vinyl resin (e.g., polyvinyl acetate), and rubber material (e.g., styrene-butadiene copolymer rubber (SBR)) are used. In terms of firmly holding the complexing agent, polyacrylonitrile easily forming a porous film is preferable. A kind of resin material may be used singly, or two or more kinds thereof may be used in combination.

The barrier layer is formed, for example, by applying a mixture including the complexing agent, resin material, and a liquid component on the surface of the electrode or separator, and thereafter, drying to remove the liquid component. In the mixture, the complexing agent and the resin material may be dissolved, or dispersed. The liquid component is suitably decided depending on the type of the complexing agent and the resin material, and for example, water, alcohol (e.g., ethanol), ether (e.g., tetrahydrofuran), amide (e.g., dimethylformamide), N-methyl-2-pyrrolidone (NMP), or a solvent mixture thereof are used. The mixture can be applied by, without particular limitation, a method of coating using various coaters, immersing, or spraying.

When applying the mixture including the complexing agent, resin material, and liquid component to the surface of the electrode or separator, by increasing the viscosity of the mixture to a certain extent, the coating can be formed sufficiently thick, and the barrier layer to be formed can have a large thickness. The viscosity of the mixture can be controlled by the molecular weight of the resin material.

In the following, the power storage device of the present disclosure is described in more detail element by element, with the non-aqueous electrolyte secondary battery as an example.

### (Positive Electrode)

The positive electrode includes a positive electrode active material. The positive electrode generally includes a positive electrode current collector, and a positive electrode mixture supported on the positive electrode current collector. The positive electrode includes, generally, a layered positive electrode mixture (hereinafter, referred to as a positive electrode mixture layer) supported on the positive electrode current collector. The positive electrode mixture layer can be formed by applying a positive electrode slurry in which the elements of the positive electrode mixture are dispersed in a dispersion medium on a surface of the positive electrode current collector, and drying the slurry. The dried coating film may be rolled, if necessary. The positive electrode mixture layer may be formed on one surface of the positive electrode current collector, or may be formed on both surfaces thereof.

The positive electrode mixture may contain the positive electrode active material as an essential component, and may contain a binder, a thickener, and a conductive agent as optional components.

For the positive electrode active material, for example, a lithium transition metal composite oxide having a layered rock salt type structure is used. In particular, a lithium transition metal composite oxide including Ni, Co, and at least one of Al and Mn (hereinafter, also referred to as composite oxide NC) is promising because it can bring out a high capacity and a high voltage. With the composite oxide NC having a high Ni content, it is advantageous in terms of costs, and a higher capacity can be ensured. With a high Ni content, the composite oxide NC has an unstable crystal structure, and a transition metal such as Ni tends to dissolve easily. Furthermore, when Ni is dissolved from the composite oxide NC with a high Ni content, a nickel oxide (NiO) layer is formed on the particle surface, and may cause an increase in the resistance of the positive electrode. However, by providing the barrier layer, movement of the dissolved metal ion from the positive electrode side to the negative electrode side is suppressed, and metal deposition in the negative electrode can be suppressed. Furthermore, the complexing agent can be expected to work to form a coating by being adsorbed to the surface of the composite oxide NC, and suppresses dissolution of the transition metal (especially Ni).

The composition of the composite oxide NC can be represented by, for example, Li_{α}Ni_{(1-x1-x2-x3-y)}Coₓ₁Mnₓ₂Alₓ₃M_{y}O_{2+β}(0.95<α<1.05, 0.5≤1-x1-x2-x3-y≤0.95, 0<x1≤0.04, 0≤x2≤0.1, 0≤x3≤0.1, 0<x2+x3≤0.2, 0≤y≤0.1, and - 0.05≤β≤0.05). However, M is at least one selected from the group consisting of Ti, Zr, Nb, Mo, W, Fe, Zn, B, Si, Mg, Ca, Sr, and Y.

The (1-x1-x2-x3-y) representing the Ni ratio (atomic ratio) preferably satisfies, in view of a higher capacity, 0.8≤1-x1-x2-x3-y≤0.95, more preferably satisfies 0.9≤1-x1-x2-x3-y≤0.95.

The "x1" representing the Co ratio (atomic ratio) is larger than 0 and 0.04 or less, preferably 0.02 or less, more preferably 0.015 or less.

The "x2" representing the Mn ratio (atomic ratio) is 0 ≤ x2 ≤ 0.1, preferably 0 < x2 ≤ 0.1. The composite oxide NC including Mn is relatively reasonable and has a high capacity.

The "x3" representing the Al ratio (atomic ratio) is 0 ≤ x3 ≤ 0.1, preferably 0.03 ≤ x3 ≤ 0.1, and can be 0.05 ≤ x3 ≤ 0.1. The composite oxide NC including Al stabilizes the crystal structure, and easily ensures excellent cycle characteristics.

The content of the element composing the composite oxide NC can be measured, for example, by Inductively Coupled Plasma Atomic Emission Spectroscopy (ICP-AES), Electron Probe Micro Analyzer (EPMA), or EDX.

The positive electrode active material may include a lithium transition metal composite oxide other than the composite oxide NC, but preferably, the composite oxide NC ratio is high. The composite oxide NC ratio in the positive electrode active material is, for example, 90 mass% or more, or 95 mass% or more. The composite oxide NC ratio in the positive electrode active material is 100 mass% or less. The positive electrode active material may be composed only of the composite oxide NC.

For the binder, for example, a resin material is used. Examples of the binder include fluorine resin (e.g., polyvinylidene fluoride, polyhexafluoropropylene, polytetrafluoroethylene), polyolefin resin (e.g., polyethylene, polypropylene), polyamide resin (e.g., aramid resin), polyimide resin (e.g., polyimide, polyamide-imide), acrylic resin (e.g., polyacrylic acid, polymethacrylic acid, acrylic acid-methacrylic acid copolymer, ethylene-acrylic acid copolymer, or a salt thereof), vinyl resin (e.g., polyvinyl acetate), and a rubber material (e.g., styrene-butadiene copolymer rubber (SBR)). A kind of binder may be used singly, or two or more kinds thereof may be used in combination.

Examples of the thickener include cellulose derivatives such as cellulose ether. Examples of the cellulose derivative include carboxymethyl cellulose (CMC) and a modified product thereof, and methylcellulose. The CMC derivatives include also CMC salts. Examples of the salt include alkali metal salt (e.g., sodium salt), and ammonium salt. A kind of thickener may be used singly, or two or more kinds thereof may be used in combination.

Examples of the conductive agent include electrically conductive fiber and electrically conductive particles. Examples of the electrically conductive fiber include carbon fiber, carbon nanotube, and metal fiber. Examples of the electrically conductive particles include electrically conductive carbon (carbon black, graphite, etc.), and metal powder. A kind of conductive agent may be used singly, or two or more kinds thereof may be used in combination.

The dispersion medium used for the positive electrode slurry is not particularly limited, and for example, water, alcohol (e.g., ethanol), ether (e.g., tetrahydrofuran), amide (e.g., dimethylformamide), N-methyl-2-pyrrolidone (NMP), or a solvent mixture thereof is used.

The positive electrode current collector is selected in accordance with the type of the non-aqueous electrolyte secondary battery. Examples of the positive electrode current collector include a sheet type one. Examples of the current collector include metal foil. Examples of the material of the positive electrode current collector may be stainless steel, aluminum, aluminum alloy, and titanium.

The barrier layer is preferably formed so as to cover 50% or more, and particularly preferably 90% or more of the outer surface of the positive electrode mixture layer of the positive electrode mixture layer formed on at least one of the positive electrode current collector surface (preferably the positive electrode mixture layer formed on both surfaces of the positive electrode current collector). The impurity metal ions are generated at the positive electrode side, and therefore by forming the barrier layer on the positive electrode surface, the barrier layer can work more effectively. That is, a coating that suppresses the dissolution of metal ions can be easily formed on the impurity metal and the positive electrode active material, and the generated metal ion can form a complex quickly and efficiently.

### (Negative Electrode)

The negative electrode may include a negative electrode mixture including a negative electrode active material, and a negative electrode current collector supporting the negative electrode mixture. The negative electrode may include a layered negative electrode mixture (hereinafter, referred to as a negative electrode mixture layer). The negative electrode mixture may further include at least one selected from the group consisting of a binder, thickener, and conductive agent. In the case of lithium secondary batteries, the negative electrode including the negative electrode current collector will suffice.

For the negative electrode active material, a metal lithium, or a lithium alloy may be used, but a material that is capable of electrochemically storing and releasing lithium ions is suitably used. Examples of such a material include a carbon material, a Si-containing material, and a Sn-containing material. The negative electrode may include one kind of negative electrode active material, or two or more kinds can be used in combination. Preferably, the negative electrode active material includes a carbon material and a Si-containing material. The carbon material can be combined with the Si-containing material.

Examples of the carbon material include graphite, graphitizable carbon (soft carbon), and non-graphitizable carbon (hard carbon). A kind of carbon material may be used singly, or two or more kinds thereof may be used in combination.

The carbon material is preferably graphite, because it has excellent charge/discharge stability, and has a small irreversible capacity. Graphite includes, for example, natural graphite, artificial graphite, graphitized mesophase carbon particles, and the like. The graphite particles may partially include amorphous carbon, graphitizable carbon, or non-graphitizable carbon.

Examples of the Si-containing material include elemental Si, a silicon alloy, and a silicon compound (silicon oxide, silicate, etc.). Examples of the silicon oxide include SiOₓ particles. The "x" is, for example 0.5 ≤ x < 2, or may be 0.8 ≤ x ≤ 1.6. A kind of Si-containing material may be used singly, or two or more kinds thereof may be used in combination.

Examples of the binder include those resin materials exemplified for the positive electrode. The conductive agent can be selected, for example, from those exemplified for the positive electrode. The shape of the negative electrode current collector is the same as that of the already-described positive electrode current collector. For the material of the negative electrode current collector, stainless steel, nickel, nickel alloy, copper, copper alloy, or the like can be exemplified. The dispersion medium used for the negative electrode slurry can be selected from those exemplified for, for example, the positive electrode.

The barrier layer is preferably formed so as to cover 50% or more, and particularly preferably 90% or more of the outer surface of the negative electrode mixture layer formed on at least one of the negative electrode current collector surface (preferably the negative electrode mixture layer formed on both surfaces of the negative electrode current collector). The impurity metal ions reduced to metal at the negative electrode side deposit, and therefore by forming the barrier layer on the negative electrode surface, the metal deposition can be inhibited efficiently.

### (Non-aqueous Electrolyte)

The non-aqueous electrolyte can be, not only a liquid non-aqueous electrolyte (that is, non-aqueous liquid electrolyte), a gel electrolyte having no flowability composed of a gelling agent or a matrix material and a liquid electrolyte, or a solid electrolyte. The non-aqueous electrolyte includes non-aqueous liquid electrolytes, gel electrolytes, and solid electrolytes, and excludes aqueous solution electrolytes.

Examples of the non-aqueous solvent composing the non-aqueous liquid electrolyte include cyclic carbonate, chain carbonate, cyclic carboxylate, and chain carboxylate. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. The non-aqueous electrolyte may include one kind of the non-aqueous solvent, or two or more kinds may be used in combination.

Examples of the electrolytic salt (lithium salt) composing the non-aqueous liquid electrolyte include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borate, and imide salt. Examples of the borate include lithium bis(1,2-benzene diolate (2-)-O,O') borate, lithium bis(2,3-naphthalene diolate (2-)-O,O') borate, lithium bis(2,2'-biphenyl diolate (2-)-O,O') borate, and lithium bis(5-fluoro-2-olate-1-benzene sulfonic acid-O,O') borate. Examples of the imide salt include bisfluorosulfonyl imide lithium (LiN(FSO₂)₂), bistrifluoromethane sulfonic acid imide lithium (LiN(CF₃SO₂)₂), trifluoromethane sulfonic acid nonafluorobutane sulfonic acid imide lithium (LiN(CF₃SO₂)(C₄F₉SO₂)), and bispentafluoroethane sulfonic acid imide lithium (LiN(C₂F₅SO₂)₂). The non-aqueous electrolyte may include one kind of lithium salt, or two or more kinds thereof may be used in combination.

The electrolytic salt concentration in the non-aqueous liquid electrolyte is, for example, 0.5 mol/L or more and 2 mol/L or less.

### (Separator)

The separator has excellent ion permeability and suitable mechanical strength and electrically insulating properties. The separator may be, for example, a microporous thin film, a woven fabric, or a nonwoven fabric, or at least two laminates selected from these can be used. Preferably, the separator material is polyolefin (e.g., polypropylene, polyethylene).

The barrier layer is preferably formed so as to cover 50% or more, and particularly preferably 90% or more of at least one (preferably both surfaces) of the surface of the separator. For example, by forming the barrier layer on both sides of the separator, the two barrier layers are inevitably interposed between the positive electrode and the negative electrode. The barrier layer at the positive electrode side works on the positive electrode active material, and also efficiently and quickly forms a complex with the impurity metal ions generated at the positive electrode side. The barrier layer of the negative electrode side also efficiently inhibits the metal deposition at the negative electrode side. Furthermore, the separator generally has a wider width than that of the positive electrode and the negative electrode, and is interposed between the entire positive electrode and the entire negative electrode, and therefore it is very difficult for the metal ion to move between the electrodes without passing through the barrier layer.

In an example structure of the non-aqueous electrolyte secondary battery, an electrode group and a non-aqueous electrolyte are accommodated in an outer package, and the electrode group has a positive electrode and a negative electrode wound with a separator interposed therebetween. Alternatively, instead of the wound type electrode group, other types of electrode group can be used such as a laminate type electrode group, in which the positive electrode and the negative electrode are laminated with the separator interposed therebetween. The non-aqueous electrolyte secondary battery may be any shape of, for example, a cylindrical shape, a rectangular shape, a coin-shape, a button shape, or a laminate shape.

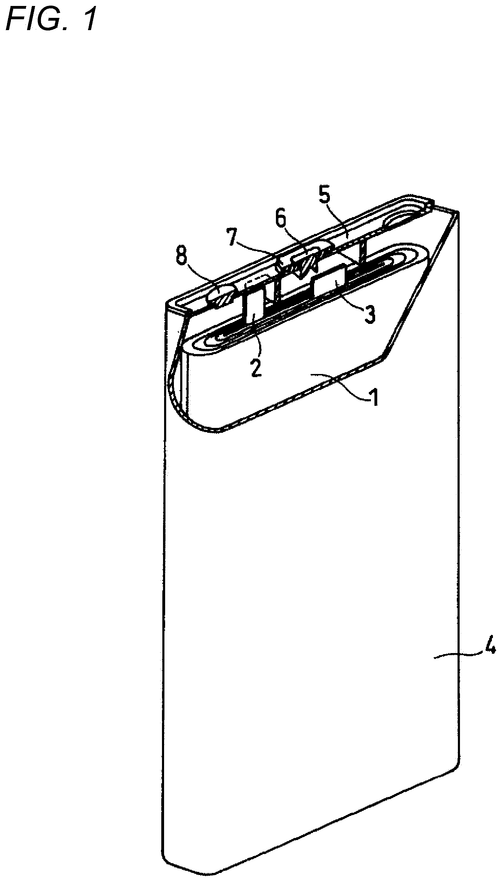

In the following, a structure of a rectangular non-aqueous electrolyte secondary battery is described as an example of the non-aqueous electrolyte secondary battery of the present disclosure with reference to FIG. 1. FIG. 1 is a partially cutaway schematic oblique view of the non-aqueous electrolyte secondary battery in an embodiment of the present disclosure.

As shown in FIG. 1, the battery includes a bottomed rectangular battery case 4, an electrode group 1 accommodated in the battery case 4, and a non-aqueous electrolyte. The electrode group 1 has a negative electrode in the form of a long strip, a positive electrode in the form of a long strip, and a separator interposed therebetween. The electrode group 1 is formed by winding the negative electrode, the positive electrode, and the separator around a flat core and removing the core.

The negative electrode current collector of the negative electrode is electrically connected to the negative electrode terminal 6 provided in a sealing plate 5 with the negative electrode lead 3. The negative electrode terminal 6 is insulated from the sealing plate 5 by a resin gasket 7. The positive electrode current collector of the positive electrode is connected to the reverse side of the sealing plate 5 through the positive electrode lead 2. That is, the positive electrode lead 2 is electrically connected to the battery case 4 which also serves as the positive electrode terminal. The periphery of the sealing plate 5 is fitted to the open end of the battery case 4, and the fitting portion is laser welded. The injection hole for the liquid electrolyte provided in the sealing plate 5 is plugged with a sealing plug 8.

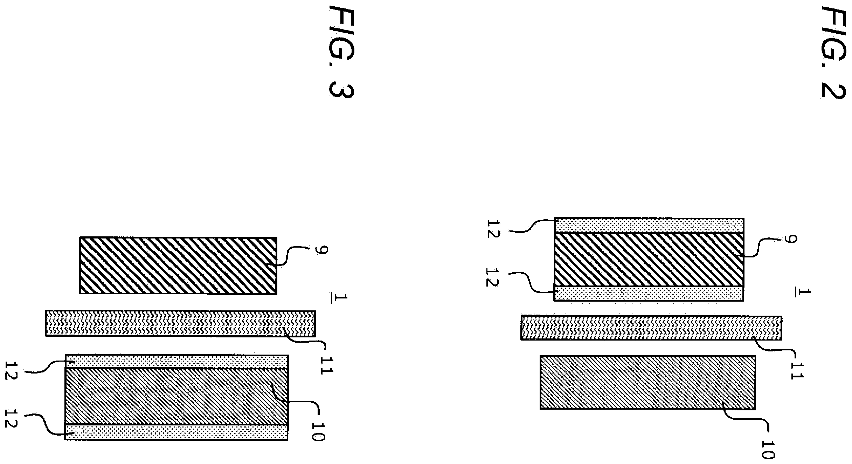

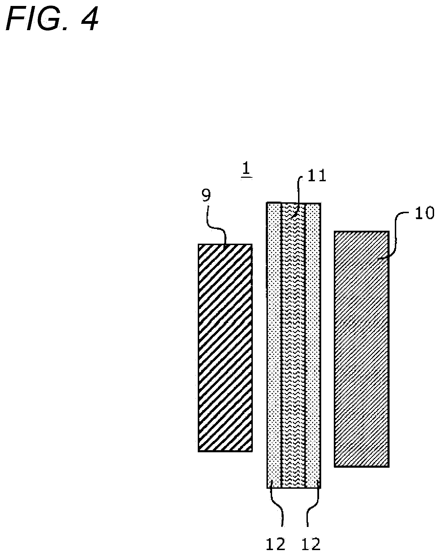

FIG. 2 schematically shows an example of the electrode group 1, having the barrier layer 12 on both sides of the positive electrode 9. FIG. 3 schematically shows an example of the electrode group 1, having the barrier layer 12 on both sides of the negative electrode 10. FIG. 4 schematically shows an example of the electrode group 1, having a barrier layer 12 on both sides of the separator 11.

Although a non-aqueous electrolyte secondary battery is given as an example in the description above, the power storage device is not limited to the non-aqueous electrolyte secondary battery.

### [Examples]

Hereinafter, the present invention will be specifically described based on Examples and Comparative Examples, but the present invention is not limited to the following Examples.

### <Examples 1 to 21 and Comparative Examples 1 to 5>

A non-aqueous electrolyte secondary battery was made and evaluated as below. The configuration of the battery of Examples and Comparative Examples is shown in Table 1.

### (1) Production of positive electrode

100 parts by mass of the positive electrode active material particles, 1 part by mass of acetylene black, 1 part by mass of polyvinylidene fluoride, and a suitable amount of NMP were mixed, thereby producing a positive electrode slurry. Next, the positive electrode slurry was applied to one surface of aluminum foil, the coating was dried and then rolled to form a positive electrode mixture layer (thickness 95 µm, density 3.6 g/cm³) on one surface of the aluminum foil, thereby producing a positive electrode. For the positive electrode active material, LiNi_{0.88}Co_{0.09}Al_{0.03}O₂ was used. In Examples 8 to 14, the barrier layer is formed on the entire surface of the positive electrode mixture layer as in (5) below.

### (2) Production of negative electrode

98 parts by mass of the negative electrode active material (graphite), 1 part by mass of sodium salt (CMC-Na) of carboxymethyl cellulose, and 1 part by mass of SBR, and a suitable amount of water were mixed, thereby preparing a negative electrode slurry. Next, the negative electrode slurry was applied to one side of copper foil, which was the negative electrode current collector, and the coating was dried and then rolled to form negative electrode mixture layers on one surface of the copper foil. In Examples 15 to 21, the barrier layer was formed on the entire surface of the negative electrode mixture layer as in (5) below.

### (3) Separator

For the separator, a polyethylene-made separator having a thickness of 12 µm was used.

In Examples 1 to 7, the barrier layer was formed on the surface of the positive electrode side as in (5) below.

In Comparative Example 2, the barrier layer was formed in the same manner as in Examples 1 to 7, except that the resin material was not mixed, thereby allowing the separator to carry only the complexing agent, not the resin material.

In Comparative Examples 3 to 5, the barrier layer was formed in the same manner as in Examples 1 to 7, except that the complexing agent was not mixed, thereby allowing the separator to carry only the resin material, not the complexing agent.

### (4) Preparation of non-aqueous liquid electrolyte

LiPF₆ was dissolved in a solvent mixture of EC and EMC (EC:EMC=3:7 (volume ratio)), thereby preparing a non-aqueous liquid electrolyte. The non-aqueous liquid electrolyte had a LiPF₆ concentration of 1.0 mol/L.

### (5) Formation of barrier layer

A mixture (paste) including the complexing agent (1,3,5-triazine-2,4,6-trithiol) shown in Table 1, polyacrylonitrile (weight-average molecular weight 150,000) as the resin material, and a suitable amount of NMP as the liquid component was prepared. The prepared mixture was applied on the entire surface of the positive electrode mixture layer, the entire surface of the negative electrode mixture layer, or the entire surface of the positive electrode side of the separator, and thereafter, dried, thereby forming a barrier layer having a thickness shown in Table 1. The ratio of the cross sectional area of the complexing agent was changed by changing the complexing agent content and the liquid component content in the paste and controlling the paste viscosity. The complexing agent amount relative to 100 parts by mass of the resin material was changed in the range of 10 parts by mass to 830 parts by mass.

### (6) Evaluation of barrier layer

### (Barrier layer thickness)

The cross sections of the positive electrode, negative electrode, or separator after forming the barrier layer were photographed along the thickness direction of the barrier layer with an SEM, and the thickness T was measured at five points in the region where the resin material was present, and averaged. Table 1 shows the results. In Table 1, the thickness of the barrier layer in Comparative Examples 3 to 5 is the thickness of the resin material (not including the complexing agent) carried by the separator.

### (Ratio of cross sectional area of complexing agent relative to total cross sectional area of complexing agent and resin material)

The cross sections of the positive electrode, negative electrode, or separator after forming the barrier layer were photographed along the thickness direction of the barrier layer with an SEM-EDX (manufactured by JEOL Ltd. JSM-7001F). The area of the resin material and the area of the complexing agent in the photographed range were determined, and the ratio of the area of the complexing agent relative to the total area thereof was determined. Table 1 shows the results.

### (7) Preparation of non-aqueous electrolyte secondary battery

Evaluation cells for the non-aqueous electrolyte secondary battery of Examples 1 to 21 and Comparative Examples 1 to 5 were produced. First, the positive electrode was cut into a predetermined shape, thereby producing an evaluation positive electrode. The positive electrode had a region of 20 mm × 20 mm that works as the positive electrode, and a connection region of 5 mm × 5 mm for connection with a tab lead. Thereafter, the positive electrode mixture layer formed on the above-described connecting region was scraped to expose the positive electrode current collector. Afterwards, the exposed portion of the positive electrode current collector was connected to the positive electrode tab lead and a predetermined region of the outer periphery of the positive electrode tab lead was covered with an insulating tab film. Afterwards, copper powder having a diameter of about 100 µm was intentionally embedded at about a center of the positive electrode mixture layer.

The negative electrode was cut into the same form as the positive electrode, and a negative electrode for evaluation was obtained. The negative electrode mixture layer formed on the connection region similarly to the positive electrode was peeled off to expose the negative electrode current collector. Afterwards, the exposed portion of the negative electrode current collector was connected to the negative electrode tab lead in the same manner as the positive electrode, and a predetermined region of the outer periphery of the negative electrode tab lead was covered with an insulating tab film.

A cell was produced using the positive electrode and negative electrode for evaluation. First, the positive electrode and negative electrode were allowed to face each other with a separator interposed therebetween so that the positive electrode mixture layer overlapped with the negative electrode mixture layer, thereby producing an electrode group. Next, an Al laminate film (thickness 100 µm) cut into a size of 60 × 90 mm rectangle was folded into half, and the long side end of 60 mm was heat sealed at 230°C, to make it into an envelope of 60 × 45 mm. Afterwards, the produced electrode group was put into the envelope, and the end face of the Al laminate film and the position of the insulating tab film of the tab lead were aligned and heat sealed at 230°C. Next, 0.3 cm³ of the non-aqueous liquid electrolyte was injected from the not heat-sealed portion of the short side of the Al laminate film, and after the injection, they were allowed to stand for 5 minutes under a reduced pressure of 0.06 MPa to impregnate the electrode mixture layers with the non-aqueous liquid electrolyte. Lastly, the end face of the injected side of the Al laminate film was heat sealed at 230°C, thereby producing an evaluation cell. The evaluation cell was prepared in a dry air atmosphere having a dew point of -50°C or less.

### (8) Battery evaluation

The evaluation cell was sandwiched by a pair of 80 × 80 cm stainless steel (thickness 2 mm) clamps to be pressurized and fixed at 0.2 MPa. Then, charge/discharge was performed in a 25°C thermostatic chamber with the following conditions, and the capacity retention rate (%) after 100 cycles was determined.

The charging was performed at a constant current of 0.3 C (1 C is an electric current value at which designed capacity was discharged by 1 hour) until the battery voltage reached 4.2 V, and thereafter, performed at a constant voltage of 4.2 V until the electric current reached less than 0.05 C. The discharging was performed at a constant current of 0.3 C until the battery voltage reached 2.5 V. The batteries were allowed to stand with an open circuit for 20 minutes between the charging and discharging.

The ratio of the discharge capacity at the 100th cycle relative to the discharge capacity at the 1st cycle was determined as a capacity retention rate (%). A higher capacity retention rate value means that deterioration of the charge/discharge cycle characteristics is suppressed. Table 1 shows the results.

Next, the evaluation cell after the capacity retention rate evaluation was decomposed, and the negative electrode surface at a position opposing the portion of the positive electrode where the copper powder was embedded was observed with an SEM-EDX to check the presence or absence of the metal deposition. If the metal dissolution and deposition reactions progressed, metal depositions are seen on the negative electrode surface in dots. Table 1 shows the results.

**[Table 1]**

| | Barrier layer | Carried on | Complexing agent | Resin material | Barrier layer thickness^{∗1} (µm) | Cross sectional area rate of complexing agent (%) | Metal dissolution and deposition | Capacity retention rate (%) after 100 cycles |
|---|---|---|---|---|---|---|---|---|
| Ex. 1 | Present | Separator | 1,3,5-triazine-2,4,6-trithiol | Polyacrylonitrile | 1.0 | 51 | Absent | 91 |
| Ex. 2 | Present | Separator | 1,3,5-triazine-2,4,6-trithiol | Polyacrylonitrile | 3.3 | 16 | Absent | 92 |
| Ex. 3 | Present | Separator | 1,3,5-triazine-2,4,6-trithiol | Polyacrylonitrile | 5.2 | 90 | Absent | 92 |
| Ex. 4 | Present | Separator | 1,3,5-triazine-2,4,6-trithiol | Polyacrylonitrile | 7.4 | 63 | Absent | 93 |
| Ex. 5 | Present | Separator | 1,3,5-triazine-2,4,6-trithiol | Polyacrylonitrile | 19.2 | 24 | Absent | 94 |
| Ex. 6 | Present | Separator | 1,3,5-triazine-2,4,6-trithiol | Polyacrylonitrile | 26.9 | 90 | Absent | 94 |
| Ex. 7 | Present | Separator | 1,3,5-triazine-2,4,6-trithiol | Polyacrylonitrile | 40.0 | 62 | Absent | 95 |
| Ex. 8 | Present | Positive Electrode | 1,3,5-triazine-2,4,6-trithiol | Polyacrylonitrile | 1.0 | 51 | Absent | 92 |
| Ex. 9 | Present | Positive Electrode | 1,3,5-triazine-2,4,6-trithiol | Polyacrylonitrile | 3.3 | 16 | Absent | 93 |
| Ex. 10 | Present | Positive Electrode | 1,3,5-triazine-2,4,6-trithiol | Polyacrylonitrile | 5.2 | 90 | Absent | 93 |
| Ex. 11 | Present | Positive Electrode | 1,3,5-triazine-2,4,6-trithiol | Polyacrylonitrile | '/.4 | 63 | Absent | 94 |
| Ex. 12 | Present | Positive Electrode | 1,3,5-triazine-2,4,6-trithiol | Polyacrylonitrile | 19.2 | 24 | Absent | 94 |
| Ex. 13 | Present | Positive Electrode | 1,3,5-triazine-2,4,6-trithiol | Polyacrylonitrile | 26.9 | 90 | Absent | 94 |
| Ex. 14 | Present | Positive Electrode | 1,3,5-triazine-2,4,6-trithiol | Polyacrylonitrile | 40.0 | 62 | Absent | 95 |
| Ex. 15 | Present | Negative Electrode | 1,3,5-triazine-2,4,6-trithiol | Polyacrylonitrile | 1.0 | 51 | Absent | 90 |
| Ex. 16 | Present | Negative Electrode | 1,3,5-triazine-2,4,6-trithiol | Polyacrylonitrile | 3.3 | 16 | Absent | 91 |
| Ex. 17 | Present | Negative Electrode | 1,3,5-triazine-2,4,6-trithiol | Polyacrylonitrile | 5.2 | 90 | Absent | 9 1 |
| Ex. 18 | Present | Negative Electrode | 1,3,5-triazine-2,4,6-trithiol | Polyacrylonitrile | '/.4 | 63 | Absent | 92 |
| Ex. 19 | Present | Negative Electrode | 1,3,5-triazine-2,4,6-trithiol | Polyacrylonitrile | 19.2 | 24 | Absent | 94 |
| Ex.20 | Present | Negative Electrode | 1,3,5-triazine-2,4,6-trithiol | Polyacrylonitrile | 26.9 | 90 | Absent | 92 |
| Ex.21 | Present | Negative Electrode | 1,3,5-triazine-2,4,6-trithiol | Polyacrylonitrile | 40.0 | 62 | Absent | 95 |
| Comp. Ex. 1 | Absent | Absent | Absent | Absent | 0.0 | 0 | Present | 83 |
| Comp. Ex. 2 | Absent | Separator | 1,3,5-triazine-2,4,6-trithiol | Absent | 0.1 | 100 | Present | 83 |
| Comp. Ex. 3 | Absent | Separator | Absent | Polyacrylonitrile | 0.5 | 0 | Present | 83 |
| Comp. Ex. 4 | Absent | Separator | Absent | Polyacrylonitrile | 2.7 | 0 | Present | 4 |
| Comp. Ex. 5 | Absent | Separator | Absent | Polyacrylonitrile | 14.6 | 0 | Present | 85 |

| | | | | | | | | |
|---|---|---|---|---|---|---|---|---|
| * 1 In Comp. Ex., the thickness of complexing agent or resin material | | | | | | | | |

As shown in Comparative Example 1, when the barrier layer is not formed, the metal ion dissolved from the metal (copper) embedded in the positive electrode moved to the negative electrode side, and therefore the capacity retention rate was low and metal deposition was observed. However, in the batteries of Examples 1 to 21, in which the barrier layer was supported on the separator, positive electrode, or negative electrode, the capacity retention rate was high even after repetition of the charge/discharge to 100 cycles, and no metal deposition was observed. This is probably because the metal ion dissolved from the positive electrode formed a complex with the complexing agent of the barrier layer and its movement was restricted, and metal deposition in the negative electrode was suppressed. Furthermore, the coating formed with and derived from the complexing agent probably suppressed the dissolution itself of the metal ion in the positive electrode. Also, a thicker barrier layer showed a higher capacity retention rate. A longer distance for the metal ion to move in the barrier layer allows bonding of the metal ion with the complexing agent to progress with high probability, and probably suppresses the metal deposition in the negative electrode even more.

Meanwhile, with the batteries of Comparative Examples 2 to 5, in which only one of the complexing agent and the resin material was carried, similarly to the battery of Comparative Example 1, in which no complexing agent or resin material was carried, the metal deposited and the capacity retention rate was low. It was confirmed that the resin material that firmly keeps the complexing agent was effective for the complexing agent to capture metal ions efficiently and suppress movements of the metal ions in the power storage device.

### [Industrial Applicability]

The power storage device of the present disclosure is suitable for a main power source for mobile communication devices and mobile electronic devices, and for an in-vehicle power source, but usage is not limited to these.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug
9 Positive Electrode
10 Negative Electrode
11 Separator
12 Barrier layer

## Claims

1. A power storage device comprising a first electrode,
a second electrode,
a separator interposed between the first electrode and the second electrode, and
a barrier layer interposed between at least one of the following:
between the first electrode and the separator, and
between the second electrode and the separator, wherein
the barrier layer includes a complexing agent and a resin material.

2. The power storage device of claim 1, wherein the barrier layer has a thickness of 1 µm or more and 40 µm or less.

3. The power storage device of claim 1 or 2, wherein the barrier layer includes the complexing agent in a particulate state.

4. The power storage device of any one of claims 1 to 3, wherein a ratio of a cross sectional area of the complexing agent relative to a total cross sectional area of the complexing agent and the resin material is 15% or more and less than 100%.

5. The power storage device of any one of claims 1 to 4, wherein the complexing agent is a 1,3,5-triazine derivative having at least one thiol group.

6. The power storage device of claim 5, wherein the triazine derivative is at least one selected from the group consisting of 1,3,5-triazine-2-thiol, 1,3,5-triazine-2,4-dithiol, 1,3,5-triazine-2,4,6-trithiol, 6-methylthio-1,3,5-triazine-2,4-dithiol, 6-butylthio-1,3,5-triazine-2,4-dithiol, 6-methylamino-1,3,5-triazine-2,4-dithiol, 6-dimethylamino-1,3,5-triazine-2,4-dithiol, 6-diisopropylamino-1,3,5-triazine-2,4-dithiol, 6-butylamino-1,3,5-triazine-2,4-dithiol, and 6-dibutylamino-1,3,5-triazine-2,4-dithiol.

7. The power storage device of any one of claims 1 to 6, wherein the resin material is at least one selected from the group consisting of polyacrylonitrile, acrylic resin, fluorine resin, polyamide resin, and polyimide resin.

8. An electrode for a power storage device comprising an electrode having a first surface and a second surface opposing the first surface,
a barrier layer supported on at least one of the first surface and the second surface of the electrode, wherein
the electrode includes an electrode active material layer and a current collector supporting the electrode active material layer,
the barrier layer is provided at least on a surface of the electrode active material layer at an opposite side of the current collector side, and
the barrier layer includes a complexing agent and a resin material.

9. The electrode for a power storage device of claim 8, wherein the barrier layer has a thickness of 1 µm or more and 40 µm or less.

10. The electrode for a power storage device of claim 8 or 9, wherein the barrier layer includes the complexing agent in a particulate state.

11. The electrode for a power storage device of any one of claims 8 to 10, wherein a ratio of a cross sectional area of the complexing agent relative to a total cross sectional area of the complexing agent and the resin material is 15% or more and less than 100%.

12. The electrode for a power storage device of any one of claims 8 to 11, wherein the complexing agent is a 1,3,5-triazine derivative having at least one thiol group.

13. The electrode for a power storage device of claim 12, wherein the triazine derivative is at least one selected from the group consisting of 1,3,5-triazine-2-thiol, 1,3,5-triazine-2,4-dithiol, 1,3,5-triazine-2,4,6-trithiol, 6-methylthio-1,3,5-triazine-2,4-dithiol, 6-butylthio-1,3,5-triazine-2,4-dithiol, 6-methylamino-1,3,5-triazine-2,4-dithiol, 6-dimethylamino-1,3,5-triazine-2,4-dithiol, 6-diisopropylamino-1,3,5-triazine-2,4-dithiol, 6-butylamino-1,3,5-triazine-2,4-dithiol, and 6-dibutylamino-1,3,5-triazine-2,4-dithiol.

14. The electrode for a power storage device of any one of claims 8 to 13, wherein the resin material is at least one selected from the group consisting of polyacrylonitrile, acrylic resin, fluorine resin, polyamide resin, and polyimide resin.

15. A separator for a power storage device, the separator comprising a separator having a first surface and a second surface opposing the first surface, and
a barrier layer supported on at least one of the first surface and the second surface of the separator, wherein
the barrier layer includes a complexing agent and a resin material.

16. The separator for a power storage device of claim 15, wherein the barrier layer has a thickness of 1 µm or more and 40 µm or less.

17. The separator for a power storage device of claim 15 or 16, wherein the barrier layer includes the complexing agent in a particulate state.

18. The separator for a power storage device of any one of claims 15 to 17, wherein a ratio of a cross sectional area of the complexing agent relative to a total cross sectional area of the complexing agent and the resin material is 15% or more and less than 100%.

19. The separator for a power storage device of any one of claims 15 to 18, wherein the complexing agent is a 1,3,5-triazine derivative having at least one thiol group.

20. The separator for a power storage device of claim 19, wherein the triazine derivative is at least one selected from the group consisting of 1,3,5-triazine-2-thiol, 1,3,5-triazine-2,4-dithiol, 1,3,5-triazine-2,4,6-trithiol, 6-methylthio-1,3,5-triazine-2,4-dithiol, 6-butylthio-1,3,5-triazine-2,4-dithiol, 6-methylamino-1,3,5-triazine-2,4-dithiol, 6-dimethylamino-1,3,5-triazine-2,4-dithiol, 6-diisopropylamino-1,3,5-triazine-2,4-dithiol, 6-butylamino-1,3,5-triazine-2,4-dithiol, and 6-dibutylamino-1,3,5-triazine-2,4-dithiol.

21. The separator for a power storage device of any one of claims 15 to 20, wherein the resin material is at least one selected from the group consisting of polyacrylonitrile, acrylic resin, fluorine resin, polyamide resin, and polyimide resin.
